# EUROPEAN PATENT APPLICATION

(11) **EP 1 827 045 A1**
(43) Date of publication of application: **29.08.2007**
(21) Application number: 06252584.5
(22) Date of filing: 18.05.2006
(51) Int. Cl.: H04Q 7/38, H04L 29/06

(54) **Communication network including mobile radio equipment and radio control system for data encryption at different security levels**

(30) Priority: 28.02.2006 JP 2006052429
(71) Applicant: Fujitsu Ltd., Kawasaki-shi, Kanagawa 211-8588 (JP)
(72) Inventor: Hara, Masayuki, c/o Fujitsu Limited, Kawasaki-shi, kanagawa 211-8588 (JP)
(74) Representative: Stebbing, Timothy Charles

(57) **Abstract**

A communication network includes mobile radio equipment (100) and a radio control system (200) between which data encrypted at different security levels are transmitted bi-directionally. The mobile radio equipment (100) includes: a security-level selection unit (11) that selects one from among a plurality of security levels; and an encryption/decryption unit (14, 15) that encrypts/decrypts data to/from the radio control system (200) using confidentiality parameters that are notified from the radio control system and correspond to the security level chosen by the security-level selection unit (11).

## Description

This application is based upon and claims the benefit of priority from the prior Japanese Patent Application No. 2006-052429, filed on February 28, 2006.

The present invention relates to a communication network including mobile radio equipment and a radio control system, and more particularly to mobile radio equipment and a radio control system suitable for the 3rd generation partnership project (3GPP), a standard of the mobile communication system developed by the standardization project of the 3rd generation mobile communication system.

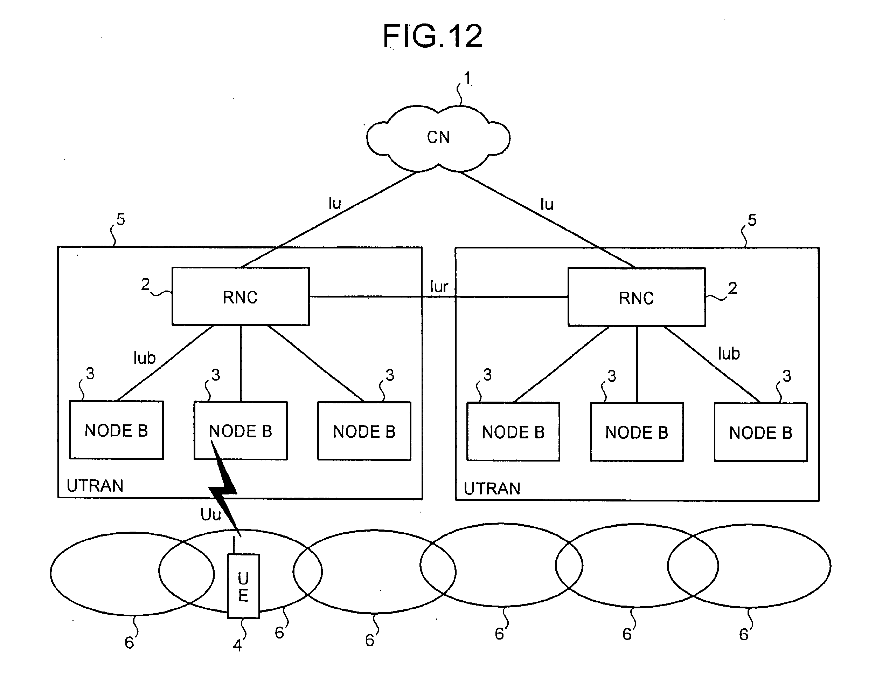

Fig. 12 is a diagram showing a network architecture of the 3GPP system. As shown in Fig. 12, the 3GPP system includes: a core network (CN) 1; a plurality of radio network controllers (RNC) 2 connected to the core network (CN) 1; a plurality of radio base stations (Node B) 3 connected to each radio network controller (RNC) 2; and a plurality of mobile terminals (below, "mobile radio equipment" or "user equipment" (UE)) 4 moving freely among the cells 6 covered by the radio base stations (Node B) 3.

A network constituted by the radio network controllers (RNC) 2 and their subordinate radio base stations (Node B) 3 is called a UMTS Terrestrial Radio Access Network (UTRAN) 5. In the following explanation, the whole system on the base station side containing the UTRAN 5 and the core network (CN) 1 is called a radio control system, in contrast to the mobile radio equipment (UE) 4.

Communication through a transmission line (Uu) between the mobile radio equipment (UE) 4 and the radio base station (Node B) 3 is performed by radio. On the other hand, communications through a transmission line (Iub) between the radio base station (Node B) 3 and the radio network controller (RNC) 2, through a transmission line (Iu) between the radio network controller (RNC) 2 and the core network (CN) 1, and through a transmission line (Iur) between the radio network controller (RNC) 2 and another radio network controller (RNC) 2 are performed by wire or optical fibre.

In the 3GPP, the data flow direction from the core network (CN) 1 to the mobile radio equipment (UE) 4 is referred to as the downlink (DL), and the opposite direction as the uplink (UL). Generally in the 3GPP, 96 radio base stations (Node B) 3 at most are connected to each radio network controller (RNC) 2. About 1,000 pieces of mobile radio equipment (UE) 4 can be accommodated per one cell.

In the 3GPP system, for preventing third parties from eavesdropping, information transmitted between the mobile radio equipment (UE) 4 and the UTRAN 5, such as user data, control information, and Temporary Mobile Subscriber Identity (TMSI) which is a temporary user-identifier are encrypted/decrypted by the KASUMI algorithm. The technical particulars of the encryption/decryption are explained in the documents TS33.102 (see, for example, "3GPP Specification detail", http://www.3gpp.org/ftp/Specs/html-info/33102.htm (retrieved on February 7, 2006)) and TS33.105 (see, for example, "3GPP Specification detail", http://www.3gpp.org/ftp/Specs/html-info/33105.htm (retrieved on February 7, 2006)) available on the official website of 3GPP.

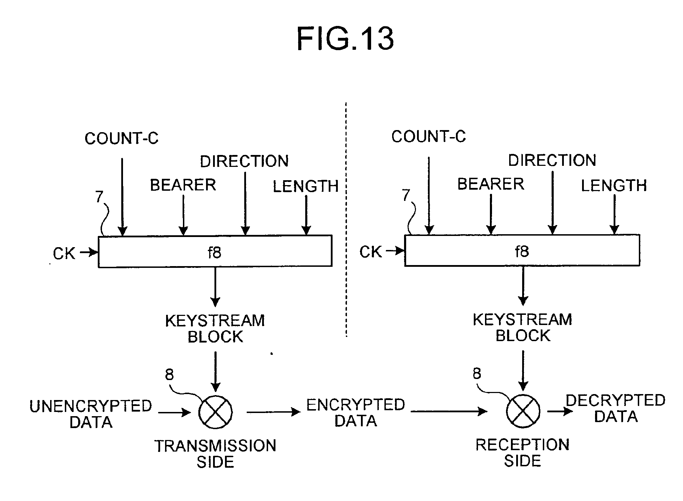

Here, the encryption/decryption mechanism is explained briefly. Fig. 13 is a diagram for explaining the encryption/decryption mechanism of the conventional 3GPP. For example, in the case of the uplink, the mobile radio equipment (UE) 4 serves as a transmitter, and the radio network controller (RNC) 2 serves as a receiver. The situation between them is reversed in the case of the downlink. Each item of mobile radio equipment (UE) 4 and UTRAN 5 includes an identical confidentiality processing (encryption) section, including a confidentiality-code generation block 7 and an exclusive OR operation unit 8.

The confidentiality-code generation block 7 performs a so-called f8 algorithm specified by the 3GPP based on confidentiality parameters to generate a confidentiality code KEYSTREAM BLOCK. The exclusive OR operation unit 8 takes an exclusive OR of the confidentiality code KEYSTREAM BLOCK and unencrypted data bit by bit, to encrypt the unencrypted data. Confidentiality parameters required to generate the confidentiality code KEYSTREAM BLOCK are: a frame number COUNT-C; a connection type BEARER; transmission direction DIRECTION; the bit length to be encrypted or decrypted LENGTH; and the confidentiality key (encryption key) CK.

The frame number COUNT-C is variable and changes with conditions. The frame number COUNT-C consists of a total of 32 bits consisting of a long period part (HFN) of 24, 25 or 20 bits and a short period part (CFN or SN) of 8, 7, or 12 bits. After confidentiality start time, every time when the short period part takes a round (at intervals of the short period), the long period part is incremented. Other confidentiality parameters are fixed values. On the receiver side, the confidentiality-code generation block 7 generates a confidentiality code KEYSTREAM BLOCK by the f8 algorithm using the same confidentiality parameters as the transmitter side; and the exclusive OR operation unit 8 calculates bit by bit the exclusive OR of the confidentiality code KEYSTREAM BLOCK and the received data, to decrypt the data encrypted by the transmitter side.

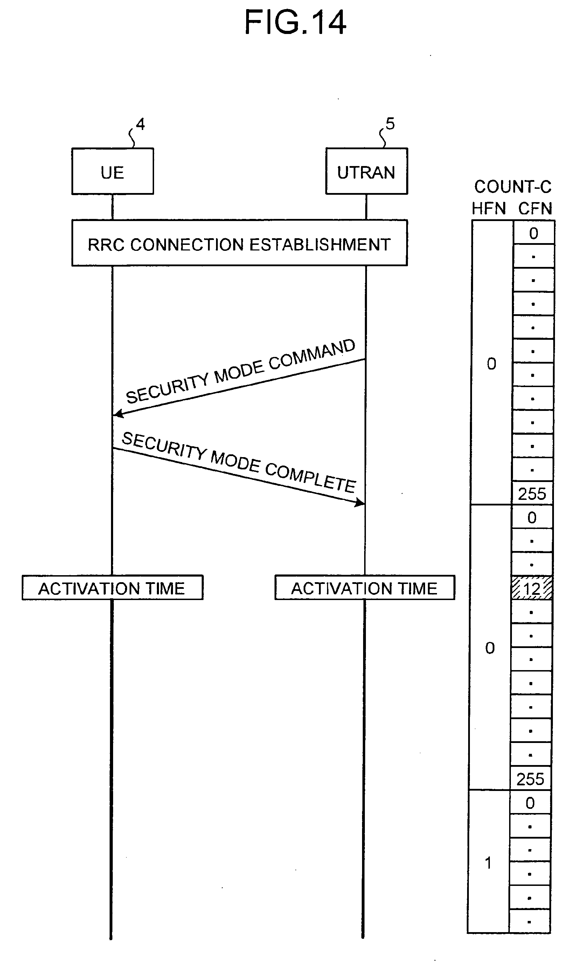

Fig. 14 is a sequence diagram showing the conventional simple confidentiality execution procedure of a dedicated traffic channel (DTCH) for a circuit-switched (CS) call between the mobile radio equipment (UE) 4 and UTRAN 5. In the frame number COUNT-C for CS call, a connection frame number (CFN) is used as the short period part. In the 3GPP system, CFN is used as a parameter for matching the time period with each node. The CFN takes a value from 0 to 255, and is incremented with a cycle of 10 ms.

The initial value of the hyper frame number (HFN) which is the long period part of the frame number COUNT-C, is notified from the mobile radio equipment (UE) 4, after the RRC connection is established. As shown in Fig. 14, for ensuring security of the uplink (UL), a ciphering mode info and an activation time which indicate the confidentiality start time, i.e., CFN, are notified by the security mode command to the mobile radio equipment (UE) 4 from UTRAN 5.

In the example shown in Fig. 14, the CFN is set to 12 as the activation time, so that the mobile radio equipment (UE) 4 and UTRAN 5 can start the synchronized confidentiality processing when the CFN is 12. The same holds for securing the downlink (DL). However, since confidentiality synchronization cannot be established when the values of the frame number COUNT-C are not in agreement between the mobile radio equipment (UE) 4 and UTRAN 5, normal confidentiality processing, i.e., decryption by the UTRAN 5 of the data encrypted by the mobile radio equipment (UE) 4, becomes impossible.

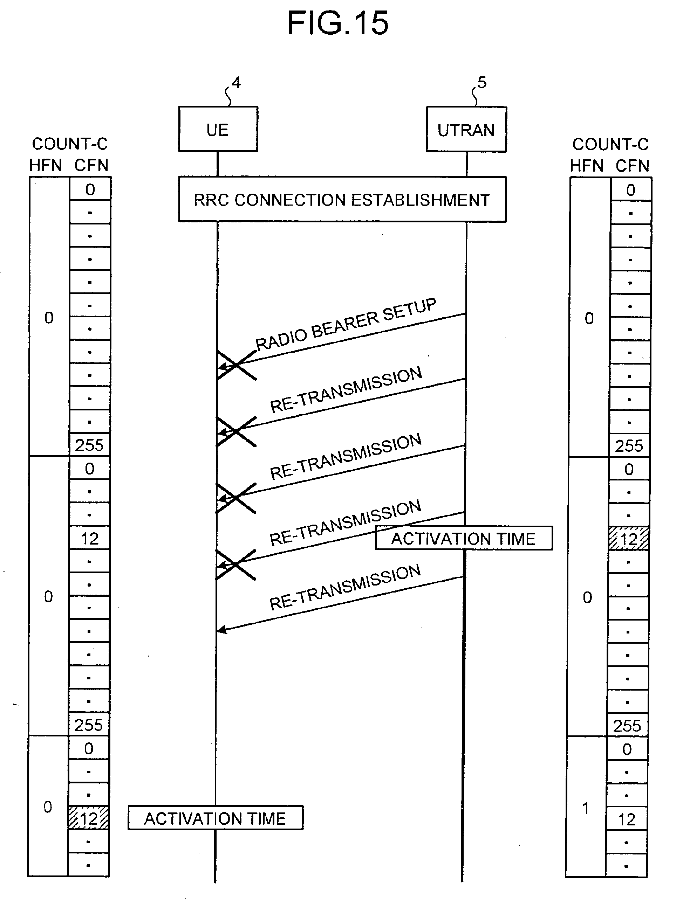

Fig. 15 is a diagram for explaining the case where the confidentiality synchronization cannot be established in the confidentiality execution sequence. In the case where the radio quality of the transmission line (Uu) between the radio base station (Node B) 3 and the mobile radio equipment (UE) 4 is so bad that the data is canceled (becomes lost) in the midway on the transmission line (Uu), re-transmitting of the radio bearer setup signal including the activation time information may sometimes be repeated, as shown in Fig. 15.

In such a case, a radio bearer setup signal may sometimes reach the mobile radio equipment (UE) 4 after the original confidentiality start time intended by the side of UTRAN 5 is over. Since the mobile radio equipment (UE) 4 derives the activation time from the received radio bearer setup signal, a gap will be produced between the confidentiality start time of UTRAN 5 and that of the mobile radio equipment (UE) 4.

On the other hand, there has been suggested a mobile communication terminal having security communication facilities and a server device communicating with the mobile communication terminal through a communication network (see, for example, Japanese Patent Application Laid-Open No. 2002-281558). When communicating, the mobile communication terminal detects the security level of the connection destination by a detection unit, and reports the detected security level to a user by a reporting unit. By these procedures, the user can check whether the security is ensured at the connection destination.

The server device includes a server side detection unit for detecting the security level, and a server side security level setting unit for setting up a security level with which communication is permitted and/or a security level with which communication is not permitted. This allows a user to freely set up a required security level.

However, in the confidentiality processing described above, a different confidentiality code KEYSTREAM BLOCK is generated for every smallest unit of transmission to apply confidentiality on the data, so that most processing capacity of the radio network controller (RNC) 2 and of the mobile radio equipment (UE) 4 is spent on this confidentiality processing. Therefore, the throughput capacity of both devices will be lowered. If the throughput capacity of the radio network controller (RNC) 2 is low, it will affect the mobile radio equipment (UE) 4 accommodating capacity, and the number of the mobile terminals (UE) 4 to be accommodated will be restricted.

Moreover, as described above, in the case when the confidentiality synchronization cannot be established between the radio network controller (RNC) 2 and the mobile radio equipment (UE) 4 due to the phase shifting of the frame number COUNT-C, there is no way to make the phases of the frame numbers COUNT-C coincide after that, thereby preventing the user of the mobile radio equipment (UE) 4 from utilizing the communication service. Furthermore, since the 3GPP system has no function to detect the difference of the phases of the frame numbers COUNT-C, the service providers cannot recognize that they are in the state where they cannot provide services. The same holds also at the time of occurrence of a problem.

A communication network according to an aspect of the present invention includes mobile radio equipment and a radio control system between which data encrypted at different security levels are transmitted bi-directionally. The mobile radio equipment includes: a security-level selection unit that selects a security level from among a plurality of security levels; an encryption unit that encrypts transmitting data to be transmitted to the radio control system using confidentiality parameters that are notified from the radio control system and correspond to the security level chosen by the security-level selection unit; and a decryption unit that decrypts received data from the radio control system using the confidentiality parameters that are notified from the radio control system and correspond to the security level chosen by the security-level selection unit.

Other objects, features and advantages of the present invention are specifically set forth in or will become apparent from the following detailed description of the invention when read in conjunction with the accompanying drawings, in which:
Fig. 1 is a diagram showing the constitution of mobile radio equipment according to an embodiment of the present invention;
Fig. 2 is a diagram showing the constitution of a radio control system according to the embodiment;
Fig. 3 is a diagram showing the constitution of an encryption unit of the mobile radio equipment and the radio control system;
Fig. 4 is a diagram showing the constitution of a decryption unit of the mobile radio equipment and the radio control system;
Fig. 5 is a diagram for explaining the confidentiality mechanism at the security level 2;
Fig. 6 is a diagram for explaining the confidentiality mechanism at the security level 3;
Fig. 7 is a sequence diagram showing a procedure in the case when mobile radio equipment transmits signals;
Fig. 8 is a sequence diagram showing a procedure in the case when the mobile radio equipment receives signals;
Fig. 9 is a sequence diagram showing a procedure in the case when the mobile radio equipment registers a security level;
Fig. 10 is a sequence diagram showing a procedure in the case of changing the security level during a call;
Fig. 11 is a diagram showing an image of security level change during a call;
Fig. 12 is a diagram showing network configuration of the 3GPP system;
Fig. 13 is a diagram for explaining confidentiality mechanisms in the 3GPP system;
Fig. 14 is a sequence diagram showing confidentiality implementation procedure on the conventional DTCH for CS call; and
Fig. 15 is a diagram explaining a case when confidentiality synchronization cannot be established in a confidentiality implementation sequence.

Exemplary embodiments of the present invention are explained in detail below with reference to the accompanying drawings.

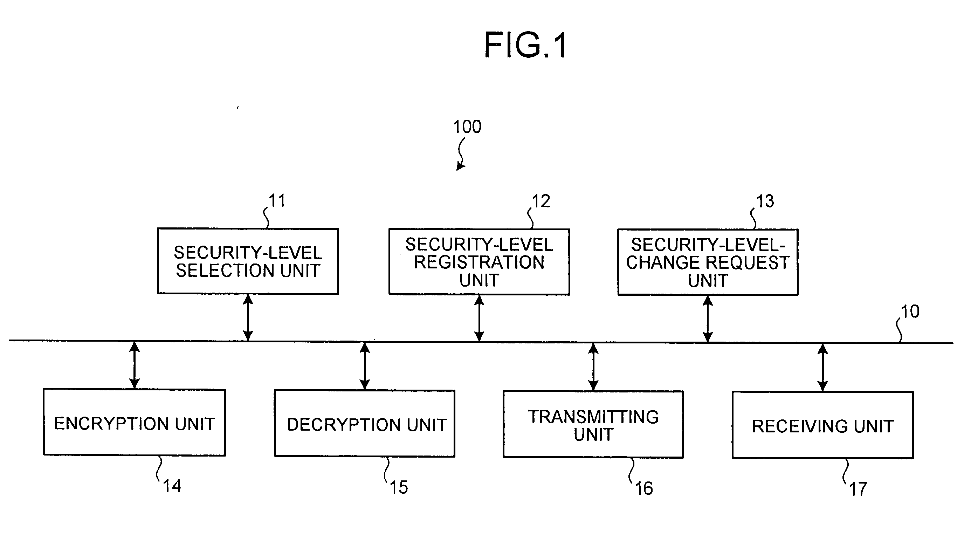

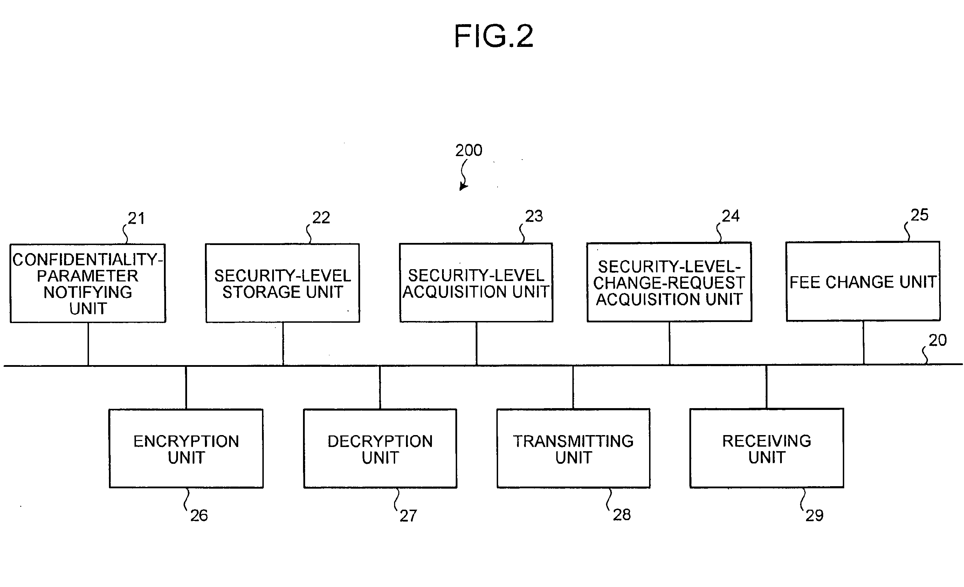

Fig. 1 is a diagram showing the constitution of mobile radio equipment (a user terminal or user equipment UE) according to an embodiment of the present invention. As shown in Fig. 1, the mobile radio equipment (UE) 100 includes a security-level selection unit 11, a security-level registration unit 12, a security-level-change request unit 13, an encryption unit 14, a decryption unit 15, a transmitting unit 16, a receiving unit 17, and a bus 10 connecting them mutually. The transmitting unit 16 transmits data to the radio control system 200 shown in Fig. 2 by radio. The receiving unit 17 receives data from the radio control system 200 by radio.

The security-level selection unit 11 selects one security level among a plurality of security levels. Upon selection, the user may just operate a user interface, such as a numerical keypad (not shown) of the mobile radio equipment (UE) 100. The security-level registration unit 12 registers beforehand with the radio control system 200 the security level used by the mobile radio equipment (UE) 100 for receiving signals.

The security-level-change request unit 13 requests the radio control system 200 to change the security level during a call. Upon request, the user may just operate the user interface, such as the numerical keypad of the mobile radio equipment (UE) 100, during a call.

The encryption unit 14 encrypts the data to be transmitted to the radio control system 200 using the confidentiality parameters notified from the radio control system 200 corresponding to the security level chosen by the security-level selection unit 11. When a security level change is requested by the security-level-change request unit 13 during a call, the encryption unit 14 changes the confidentiality parameters used for encrypting the transmitting data to the confidentiality parameters corresponding to the security level after change, with the timing notified from the radio control system 200 in response to the change request of the security level.

The decryption unit 15 decrypts the data received from the radio control system 200 using the confidentiality parameters notified from the radio control system 200 in response to the security level chosen by the security-level selection unit 11. When a change of a security level is requested by the security-level-change request unit 13 during a call, the decryption unit 15 changes the confidentiality parameters used for decrypting the received data to the confidentiality parameters corresponding to the updated security level, with the timing notified from the radio control system 200 in response to the change request of the security level.

Fig. 2 is a diagram showing the constitution of the radio control system according to the embodiment of the present invention. As shown in Fig. 2, the radio control system 200 includes a confidentiality-parameter notifying unit 21, a security-level storage unit 22, a security-level acquisition unit 23, a security-level-change-request acquisition unit 24, a fee change unit 25, an encryption unit 26, a decryption unit 27, a transmitting unit 28, a receiving unit 29, and a signal line 20 connecting the above units to each other.

The signal line 20 is a bus when the radio control system 200 consists of a single device, but it is a signal line by wire, such as a fiber-optic cable, when the radio control system 200 is constituted by two or more devices. The transmitting unit 28 transmits data to the mobile radio equipment (UE) 100 by radio. The receiving unit 29 receives data from the mobile radio equipment (UE) 100 by radio.

The confidentiality-parameter notifying unit 21 notifies the confidentiality parameters corresponding to the security level notified from the mobile radio equipment (UE) 100 to the mobile radio equipment (UE) 100. When the security-level acquisition unit 23 acquires a security level from the security-level storage unit 22, the confidentiality-parameter notifying unit 21 notifies the confidentiality parameters corresponding to the security level which the security-level acquisition unit 23 has acquired, to the mobile radio equipment (UE) 100.

Furthermore, when the security-level-change-request acquisition unit 24 acquires a security level change request from the mobile radio equipment (UE) 100, the confidentiality-parameter notifying unit 21 notifies the confidentiality parameters corresponding to the changed security level, and the security level change start timing, to the mobile radio equipment (UE) 100. The security-level storage unit 22 stores the security level notified from the mobile radio equipment (UE) 100 in advance to be used for receiving data. The security-level acquisition unit 23 acquires the security level stored in the security-level storage unit 22.

The security-level-change-request acquisition unit 24 acquires the security level change request from the mobile radio equipment (UE) 100 during a call. The fee change unit 25 changes the fee corresponding to the security level before the change into the fee corresponding to the security level after the change, when the security-level-change-request acquisition unit 24 acquires the security level change request from the mobile radio equipment (UE) 100.

The encryption unit 26 encrypts the data for transmitting to the mobile radio equipment (UE) 100, using the same confidentiality parameters as those the confidentiality-parameter notifying unit 21 has notified to the mobile radio equipment (UE) 100. When the security-level-change-request acquisition unit 24 acquires the security level change request during a call, the encryption unit 26 changes the confidentiality parameters used for encrypting the transmitting data to the confidentiality parameters corresponding to the new security level, with a security level change start timing which the confidentiality-parameter notifying unit 21 has notified to the mobile radio equipment (UE) 100.

The decryption unit 26 decrypts the data received from the mobile radio equipment (UE) 100, using the same confidentiality parameters as those the confidentiality-parameter notifying unit 21 has notified to the mobile radio equipment (UE) 100. When the security-level-change-request acquisition unit 24 acquires the security level change request during a call, the decryption unit 27 changes the confidentiality parameters used for decrypting the received data to the confidentiality parameters corresponding to the security level as changed, with the security level change start timing which the confidentiality-parameter notifying unit 21 has notified to the mobile radio equipment (UE) 100.

Hereafter, explanation is made using an example where the mobile radio equipment (UE) 100 and the radio control system 200 described above are applied to the 3GPP system shown in Fig. 12. The mobile radio equipment (UE) 100 with the constitution shown in Fig. 1 corresponds to the mobile radio equipment (UE) 4 in the network configuration shown in Fig. 12. The confidentiality-parameter notifying unit 21 and the security-level-change-request acquisition unit 24 in the radio control system 200 shown in Fig. 2 correspond, in the network configuration shown in Fig. 12, to the mobile-services switching center (MSC) (not shown) in the core network (CN) 1 and the radio network controller (RNC) 2 in UTRAN 5.

The security-level acquisition unit 23 and the fee change unit 25 correspond to the MSC. The security-level storage unit 22 corresponds to a home location register (HLR) (not shown) in the core network (CN) 1 in the network configuration shown in Fig. 12. The encryption unit 26, the decryption unit 27, the transmitting unit 28, and the receiving unit 29 correspond to the radio network controller (RNC) 2 in UTRAN 5 in the network configuration shown in Fig. 12.

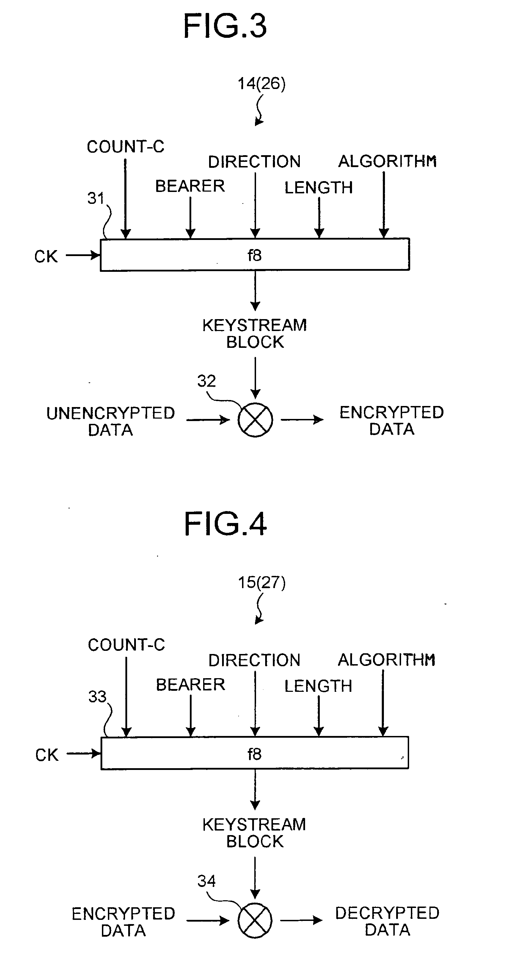

Fig. 3 is a diagram showing the constitution of the encryption unit in the mobile radio equipment (UE) and the radio control system. As shown in Fig. 3, each of the encryption unit 14 of the mobile radio equipment (UE) 100 and the encryption unit 26 of the radio control system 200 includes a confidentiality-code generation block 31 which generates the confidentiality code KEYSTREAM BLOCK by using parameters selected dependent on the security level among six confidentiality parameters: the frame number COUNT-C; the connection type (carrier) BEARER; the direction of transmission DIRECTION; the bit length to be encrypted LENGTH; the confidentiality key CK; and the ALGORITHM which specifies the ciphering (encryption) algorithm according to the security level (hereafter referred to as ciphering algorithm ALGORITHM). Each of the encryption units 14 and 26 also includes an exclusive OR operation unit 32 which encrypts unencrypted data by taking bit by bit the exclusive OR of the confidentiality code KEYSTREAM BLOCK and data to be encrypted.

Fig. 4 is a diagram showing the constitution of the decryption unit in the mobile radio equipment (UE) and the radio control system. As shown in Fig. 4, each of the decryption unit 15 of the mobile radio equipment (UE) 100 and the decryption unit 27 of the radio control system 200 includes a confidentiality-code generation block 33 which generates the confidentiality code KEYSTREAM BLOCK by using the same parameters as the transmitter, selected among six confidentiality parameters: the frame number COUNT-C; the connection type BEARER; the direction of transmission DIRECTION; the bit length to be encrypted LENGTH, the confidentiality key CK; and ciphering algorithm ALGORITHM. Each of the decryption units 15 and 27 also includes an exclusive OR operation unit 34 which decrypts encrypted data by taking bit by bit the exclusive OR of the confidentiality code KEYSTREAM BLOCK and received data.

An example of the confidentiality parameters are given in the following Table 1, and an example system of the security levels and the fee is shown in the following Table 2.

**Table 1**

| | | |
|---|---|---|
| COUNT | Frame dependent input COUNT [0] ... COUNT [31] | |
| BEARER | Bearer identity BEARER [0] ... BEARER [4] | |
| DIRECTION | Direction of transmission DIRECTION[0] | |
| CK | Confidentiality key CK [0] ... CK [127] | |
| LENGTH | Number of bits to be encrypted / decrypted (1-20000) | |

| ALGORITHM | Ciphering Algorithm | |
|---|---|---|
| | 01: | With No Confidentiality |
| | 02: | Use Only CK |
| | 03: | Fixed COUNT-C |
| | 04: | As per 3GPP Rule (Kasumi algorithm) |

**Table 2**

| Level | Degree of Confidentiality | Security | Fee |
|---|---|---|---|
| 1 | With No Confidentiality | ↓ | Inexpensive |
| 2 | Use Only CK | ↓ | ↑ |
| 3 | Fixed COUNT-C | ↓ | ↑ |
| 4 | Confidentiality As Per | ↓ | ↑ |
| | 3GPP Rule | High | ↑ |

In the examples of Table 1 and Table 2, when the ciphering algorithm ALGORITHM is "01", for example, the security level is "1" and confidentiality processing (encryption) is not performed so that the fee is least expensive. At the security level 1, since a calculation of confidentiality code KEYSTREAM BLOCK by f8 algorithm is not necessary and scrambling is not performed on data, the processing load on the radio network controller (RNC) is reduced. Therefore, the number of users to be accommodated can be increased. In addition, in the code-division multiple access (CDMA) system, since the code is multiplexed and interception is difficult, sufficient security is guaranteed even if confidentiality processing is not performed.

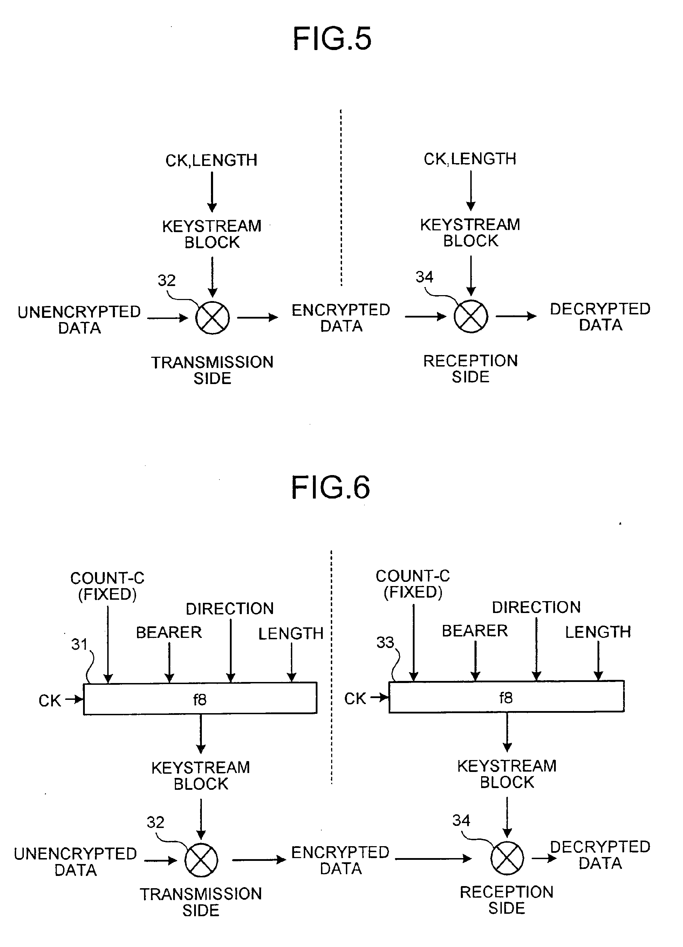

When the ciphering algorithm ALGORITHM is "02", the security level is "2". Fig. 5 is a diagram for explaining the confidentiality mechanism at the security level 2. As shown in Fig. 5, confidentiality is applied to the data by scrambling the data with the confidentiality key CK, using the bit length LENGTH and the confidentiality key CK as the confidentiality code KEYSTREAM BLOCK. Therefore, the fee is higher than that at the security level 1.

However, since it is not necessary to calculate the confidentiality code KEYSTREAM BLOCK with f8 algorithm at the security level 2, the fee is less expensive than the security level 3 and security level 4 described later. Moreover, since the processing load on the radio network controller (RNC) is reduced compared with the load of confidentiality processing at the security level 4 described later, a user accommodation capacity can be improved.

When the ciphering algorithm ALGORITHM is "03", the security level is "3". Fig. 6 is a diagram for explaining the confidentiality mechanism at the security level 3. As shown in Fig. 6, the frame number COUNT-C is fixed. The confidentiality code KEYSTREAM BLOCK is generated with the f8 algorithm using this fixed COUNT-C, the connection type BEARER, the transmission direction DIRECTION, the bit length LENGTH and the confidentiality key CK, to scramble data. Because the confidentiality code KEYSTREAM BLOCK is calculated with the f8 algorithm, the fee is higher than that at the security level 2.

Since the frame number COUNT-C is fixed at the security level 3, the values of COUNT-C do not differ between the mobile radio equipment (UE) and the radio network controller (RNC). That is, it is always possible to establish the confidentiality (encryption/decryption) synchronization. Therefore, the mobile radio equipment (UE) and the radio network controller (RNC) do not need to regulate (synchronize) the frame numbers COUNT-C, a processing load of the radio network controller (RNC) is reduced by that amount, and the user accommodation capacity is improved.

When the ciphering algorithm ALGORITHM is "04", the security level is "4". Since confidentiality processing is performed using a variable frame number COUNT-C, the connection type BEARER, the transmission direction DIRECTION, the bit length LENGTH, and the confidentiality key CK, the fee is the highest. At the security level 4, the confidentiality processing (level of security) is the same as in the conventional 3GPP system.

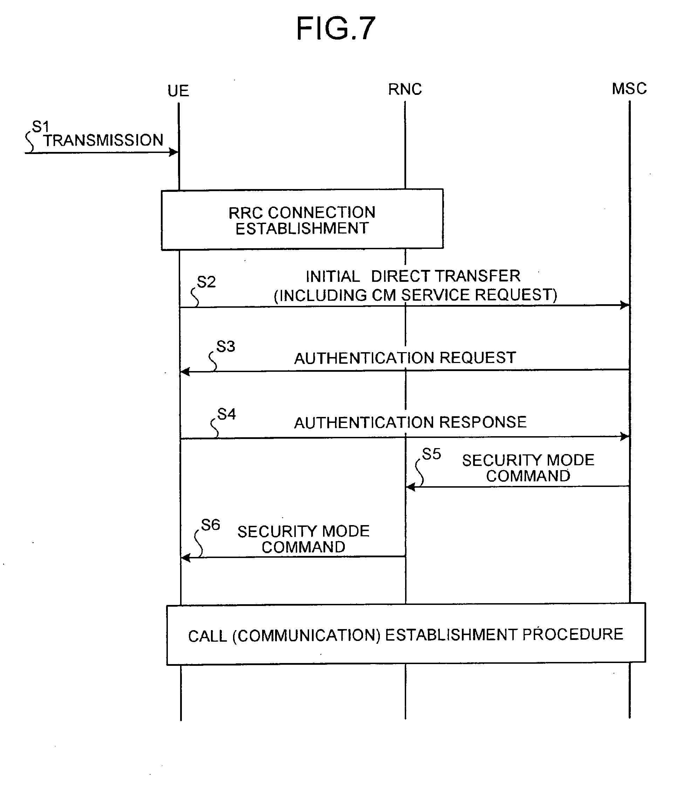

Fig. 7 is a sequence diagram showing the communication procedure in the case when the mobile radio equipment (UE) transmits signals. As shown in Fig. 7, the user first operates the mobile radio equipment (UE) to select the security level for the communication to be performed from now on, and performs transmission (Step S1). By the transmission from the mobile radio equipment (UE), an RRC connection is established with the radio network controller (RNC), and the communication path to the MSC side is secured.

Subsequently, the mobile radio equipment (UE) notifies a CM service request to MSC, in order to request the service to use and the security level upon receiving the service (Step S2). Parameters of the CM service request are given in the following Table 3.

**Table 3**

| | | |
|---|---|---|
| | 01: | Voice Call |
| CM service Type | 02: | TV Telephone |
| | 03: | Packet Communication |
| | 04: | Short Mail |
| | 01: | Level 1 |
| Security Level | 02: | Level 2 |
| | 03: | Level 3 |
| | 04: | Level 4 |

Next, MSC transmits an authentication request to the mobile radio equipment (UE), in order to perform authentication with the mobile radio equipment (UE) (Step S3). The mobile radio equipment (UE) performs authentication when it receives the authentication request, and notifies the authentication result to MSC by an authentication response (Step S4).

Upon receiving the authentication response, MSC notifies the confidentiality parameters conforming with the security level notified from mobile radio equipment (UE) to the radio network controller (RNC) by a security mode command (Step S5). On that occasion, MSC notifies all the confidentiality parameters in order to deal with the security level switching-over during telecommunication.

The radio network controller (RNC) receives the security mode command and notifies the parameters to be used to the mobile radio equipment (UE) by the security mode command, in order to establish the confidentiality synchronization with the mobile radio equipment (UE) following the specified confidentiality procedure (Step S6). Thus, the confidentiality at the security level specified by the mobile radio equipment (UE) becomes executable, and subsequently a call (communication) establishment procedure is performed.

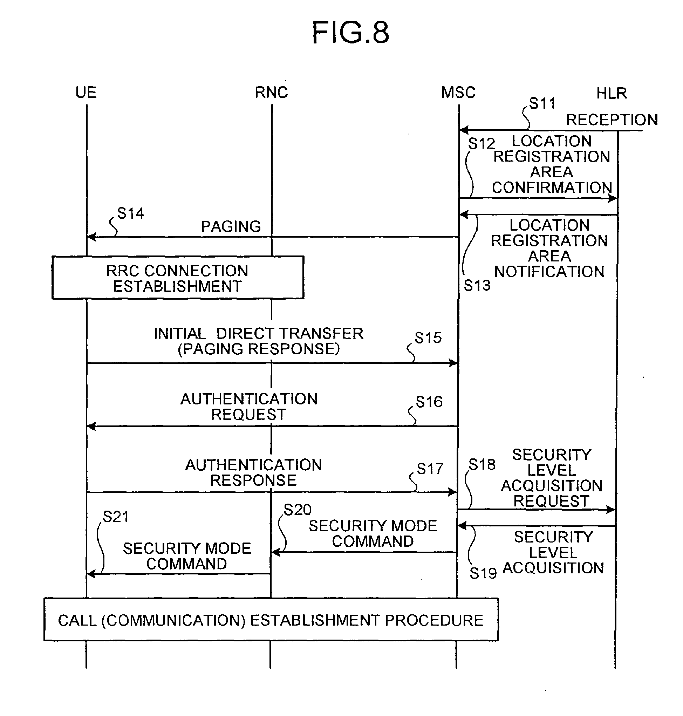

Fig. 8 is a sequence diagram showing the communication procedure in the case when the mobile radio equipment (UE) receives signals. As shown in Fig. 8, when a signal is transmitted toward destination mobile radio equipment (UE) from same-network mobile radio equipment (UE) or from mobile radio equipment (UE) in another network, it is notified to MSC of the area of the destination mobile radio equipment (UE) (Step S11). Upon receiving the notification, MSC makes an inquiry to HLR in order to acquire the position information such as the location registration area of the destination mobile radio equipment (UE) (Step S12). HLR notifies the position information of the corresponding destination mobile radio equipment (UE) to MSC (Step S13).

Next, MSC executes paging in order to notify the destination mobile radio equipment (UE) that it has received an arrival (i.e. a call is being placed) (Step S14). When an RRC connection is established between RNC and the destination mobile radio equipment (UE), the destination mobile radio equipment (UE) receives the paging and returns a paging response to MSC (Step S15). Subsequently, MSC transmits an authentication request to the destination mobile radio equipment (UE) in order to perform authentication with the destination mobile radio equipment (UE) (Step S16). When the destination mobile radio equipment (UE) receives the authentication request, it performs authentication and notifies the authentication result to MSC by the authentication response (Step S17).

Next, MSC makes a request to HLR for acquisition of the security level registered beforehand by the destination mobile radio equipment (UE) (Step S18), and acquires (downloads) the registered security level from HLR (Step S19). Then, MSC notifies the confidentiality parameters matched to the security level acquired from HLR to the radio network controller (RNC) by a security mode command (Step S20). On that occasion, MSC notifies all the confidentiality parameters in order to deal with the security level switching-over during telecommunication.

The radio network controller (RNC) receives the security mode command and notifies the parameters to be used to the destination mobile radio equipment (UE) by the security mode command, in order to establish confidentiality synchronization with the destination mobile radio equipment (UE) following the specified confidentiality procedure (Step S21). Then, a call (communication) establishment procedure is performed. Thus, the confidentiality at the security level registered beforehand by the destination mobile radio equipment (UE) becomes executable.

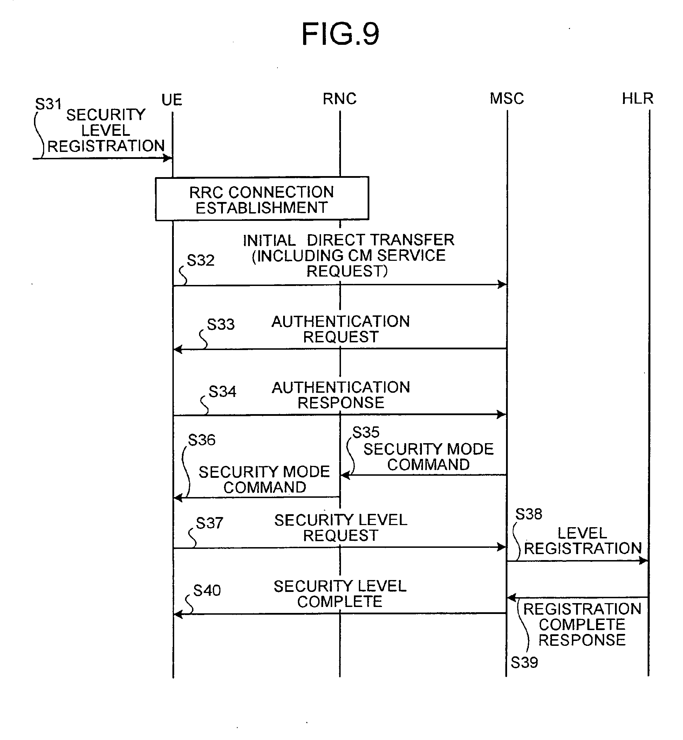

Fig. 9 is a sequence diagram showing the procedure in the case when the mobile radio equipment (UE) registers a security level on reception (e.g. upon connecting with the MSC). As shown in Fig. 9, the user first operates the mobile radio equipment (UE) to select a security level and performs security level registration (Step S31). By the transmission from the mobile radio equipment (UE), an RRC connection is established with the radio network controller (RNC), and the communication path to the MSC side is secured.

Subsequently, the mobile radio equipment (UE) notifies to MSC by a CM service request that it is performing security level registration (Step S32). Then, MSC transmits an authentication request to the mobile radio equipment (UE), in order to perform authentication with the mobile radio equipment (UE) (Step S33). Upon receiving the authentication request, the mobile radio equipment (UE) performs authentication and notifies the authentication result to MSC by an authentication response (Step S34).

Upon receiving the authentication response, if the security level on reception has been already registered, MSC notifies the confidentiality parameters matched with the registered security level to the radio network controller (RNC) by the security mode command. When the security level on reception has not yet been registered, the confidentiality parameters matched with the default security level are notified (Step S35). The default setup, although not particularly limited, is security level 4, for example.

The radio network controller (RNC) receives the security mode command and notifies the mobile radio equipment (UE) by the security mode command of the parameters to be used, in order to establish the confidentiality synchronization with the mobile radio equipment (UE) following the specified confidentiality procedure (Step S36). Next, after the confidentiality is established, the mobile radio equipment (UE) notifies the security level it requests to MSC by a security level request (Step S37).

MSC receives the security level request and asks for registration of the requested security level to HLR (Step S38). HLR returns a registration completion response to MSC, after registration of the security level is completed (Step S39). Upon receiving the registration completion response, MSC transmits a security level completion notification to the mobile radio equipment (UE) to notify that the registration of the security level is completed (Step S40). Thus, the security level of the mobile radio equipment (UE) on reception is registered.

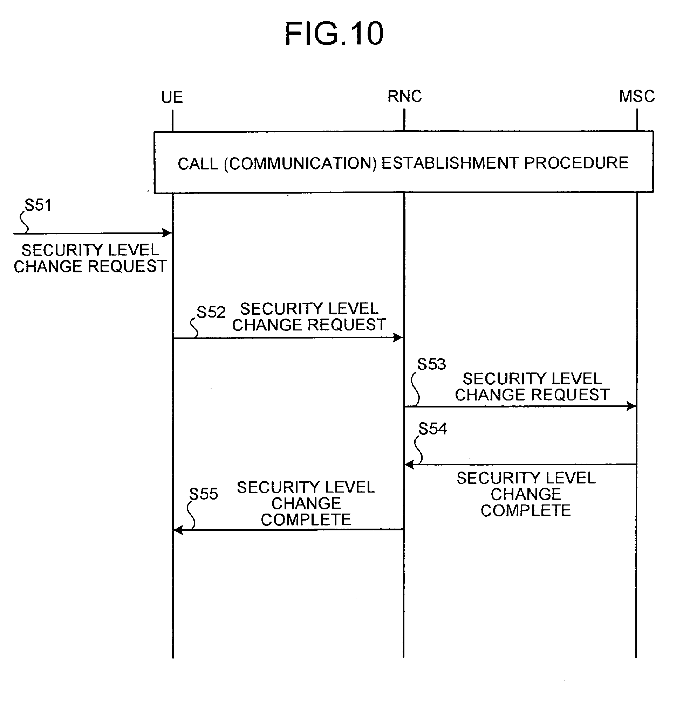

Fig. 10 is a sequence diagram showing the procedure in the case of changing the security level during a call. As shown in Fig. 10, when the user changes the security level during the call after execution of a call (communication) establishment procedure, the user operates the mobile radio equipment (UE) to request the security level change (Step S51). Then, the mobile radio equipment (UE) transmits a security level change request to the radio network controller (RNC) (Step S52). A value of the encryption algorithm ALGORITHM for specifying the security level after change is included in this security level change request.

Upon receiving the security level change request, the radio network controller (RNC) computes an activation time to determine the timing for changing the security level. It is necessary to change the fee system together with the change of the security level. Thus, the radio network controller (RNC) transmits the security level change request to MSC to notify that the security level is changed (Step S53).

Upon receiving the security level change request, MSC changes the fee setting. After completion of the fee setting change, MSC transmits security level change complete to the radio network controller (RNC) to notify the radio network controller (RNC) that change of fee setting has been completed (Step S54). On receiving the security level change complete, the radio network controller (RNC) notifies the computed activation time to the mobile radio equipment (UE) by a security level change complete (Step S55).

Thus, at the timing determined by the activation time, the mobile radio equipment (UE) and the radio network controller (RNC) switch-over the confidentiality level synchronously. This is effective when interception by a third party must be prevented for the reasons such as change of the transmitting topic to an important one in the middle of a call.

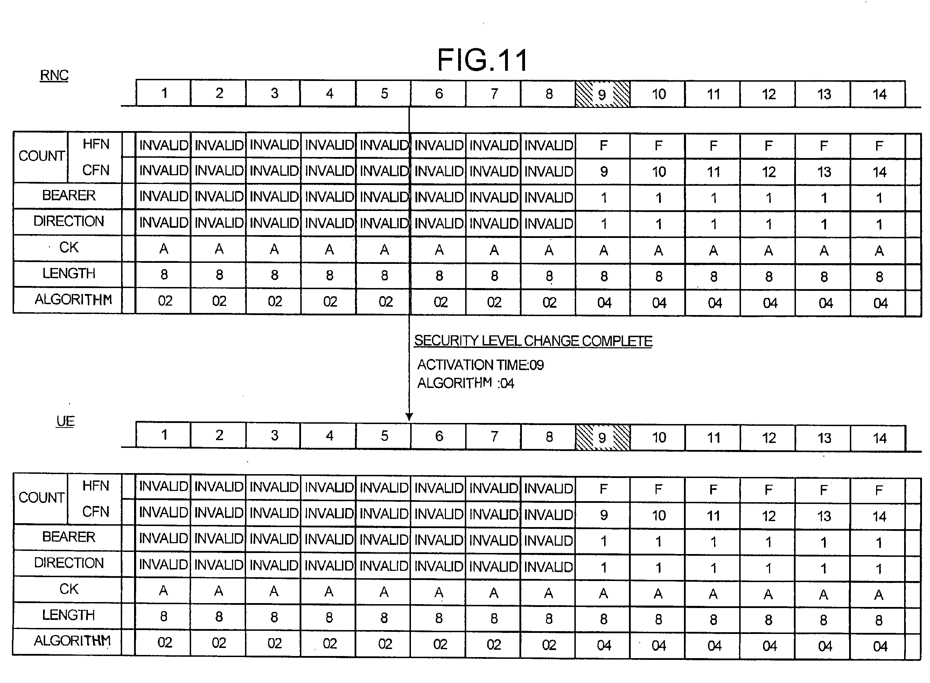

Fig. 11 is a diagram showing an image of the security level change during a call. In the example shown in Fig. 11, the radio network controller (RNC) notifies the mobile radio equipment (UE) that the activation time is "09" and the ciphering algorithm ALGORITHM is "04". Therefore, before the activation time of 9, the security level is 2, for example, so that the frame number COUNT-C, the connection type BEARER, and the transmission direction DIRECTION are invalid. At the instant the activation time of 9, the frame number COUNT-C, the connection type BEARER, and the transmission direction DIRECTION become valid, and the security level changes into the level 4.

An example of accounting of CS call is shown in the following Table 4. An example of accounting of packet switched (PS) call is shown in the following Table 5. For example, in the case of CS call, communication time is measured and charge is imposed according to the communication time. In the case of PS call, a packet quantity is measured, and charge is imposed according to the packet quantity.

**Table 4**

| | | Level 1 | Level 2 | Level 3 | Level 4 |
|---|---|---|---|---|---|
| CS | Voice call | 10 | 14 | 18 | 20 |
| | TV telephone | 20 | 24 | 28 | 30 |

| | | | | | |
|---|---|---|---|---|---|
| Call charge per 30 seconds (unit: yen) | | | | | |

**Table 5**

| | | Level 1 | Level 2 | Level 3 | Level 4 |
|---|---|---|---|---|---|
| PS | Data communication (including mail) | 0.1 | 0.14 | 0.18 | 0.2 |

| | | | | | |
|---|---|---|---|---|---|
| Fee per one packet (unit: yen) | | | | | |

As explained above, according to the embodiment, the user of the mobile radio equipment (UE) can select the security level freely. Thus, such users of mobile radio equipment that select the security level 3 or the security level 4 of high confidentiality for transmission and reception of highly confidential data and select the security level 1 or the security level 2 of low confidentiality for transmission and reception of low confidentiality data will increase in number so that the load on the radio control system side can be reduced. And therefore, the mobile radio equipment accommodation capacity can be increased. Moreover, when the user of the mobile radio equipment (UE) cannot utilize the communication service due to the reason that the confidentiality synchronization cannot be established, the user can restore from the state unable to establish confidentiality synchronization by changing the security level, and becomes able to utilize the communication service.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A communication network that includes mobile radio equipment and a radio control system between which data encrypted at various security levels can be transmitted bi-directionally, wherein the mobile radio equipment includes:
a security-level selection unit that selects a security level from among a plurality of security levels;
an encryption unit that encrypts transmitting data to be transmitted to the radio control system using confidentiality parameters that are notified from the radio control system and correspond to the security level chosen by the security-level selection unit; and
a decryption unit that decrypts received data from the radio control system using the confidentiality parameters that are notified from the radio control system and correspond to the security level chosen by the security-level selection unit.

2. The communication network according to claim 1,
wherein the mobile radio equipment further includes a security-level registration unit that registers in advance a security level on reception with the radio control system.

3. The communication network according to claim 1, or 2,
wherein:
the mobile radio equipment further includes a security-level-change request unit that transmits a request for a change of security level to the radio control system during a call;
the encryption unit changes the confidentiality parameters used for encryption of the transmitting data into the confidentiality parameters corresponding to the security level after the change, with the timing notified from the radio control system in response to the request; and
the decryption unit changes the confidentiality parameters used for decryption of the received data into the confidentiality parameters corresponding to the security level after the change, with the timing notified from the radio control system in response to the request.

4. The communication network according to claim 1, 2, or 3, wherein the radio control system includes:
a confidentiality-parameter notifying unit that notifies the mobile radio equipment of confidentiality parameters corresponding to a security level notified from the mobile radio equipment;
an encryption unit that encrypts transmitting data to be transmitted to the mobile radio equipment using confidentiality parameters the same as those the confidentiality-parameter notifying unit has notified to the mobile radio equipment; and
a decryption unit that decrypts received data from the mobile radio equipment using confidentiality parameters same as those the confidentiality-parameter notifying unit has notified to the mobile radio equipment.

5. The communication network according to claim 4,
wherein:
the radio control system further includes
a security-level storage unit that stores a security level on reception of the mobile radio equipment notified beforehand from the mobile radio equipment; and
a security-level acquisition unit that acquires the security level stored in the security-level storage unit; and
the confidentiality-parameter notifying unit is arranged to notify the mobile radio equipment of confidentiality parameters corresponding to the security level acquired by the security-level acquisition unit.

6. The radio network according to claim 4 or 5, wherein:
the radio control system further includes
a security-level-change-request acquisition unit that acquires a request for a change of security level from the mobile radio equipment during a call; and
a fee change unit that changes fee to be incurred to a user of the mobile radio equipment according to the request;
when the security-level-change-request acquisition unit acquires the request from the mobile radio equipment, the fee change unit changes the fee from that corresponding to a security level before the change into that corresponding to a security level after the change;
the confidentiality-parameter notifying unit notifies the mobile radio equipment of confidentiality parameters corresponding to the security level after the change and of a timing with which the security level before the change is to be changed;
the encryption unit changes the confidentiality parameters used for encrypting the transmitting data into the confidentiality parameters corresponding to the security level after the change, with the timing that the confidentiality-parameter notifying unit has notified to the mobile radio equipment; and
the decryption unit changes the confidentiality parameters used for decrypting the received data into the confidentiality parameters corresponding to the security level after the change, with timing that the confidentiality-parameter notifying unit has notified to the mobile radio equipment.

7. The communication network according to any preceding claim, wherein the security levels include any two or more of security levels among:
a 1st security level at which neither data encryption nor decryption is performed;
a 2nd security level at which data encryption or decryption is performed using a bit length to be encrypted or decrypted LENGTH and a confidentiality key CK as confidentiality codes;
a 3rd security level at which a confidentiality code KEYSTREAM BLOCK is generated using a fixed-valued frame number COUNT-C, a connection type BEARER, a transmission direction DIRECTION, the bit length to be encrypted or decrypted LENGTH, and the confidentiality key CK as confidentiality parameters, and data encryption or decryption is performed using the confidentiality code KEYSTREAM BLOCK; and
a 4th security level at which a confidentiality code KEYSTREAM BLOCK is generated using a variable frame number COUNT-C, the connection type BEARER, the transmission direction DIRECTION, the bit length to be encrypted or decrypted LENGTH, and the confidentiality key CK as confidentiality parameters, and data encryption or decryption is performed using the confidentiality code KEYSTREAM BLOCK.

8. The communication network according to claim 7,
wherein:
a fee corresponding to the 1st security level is lower than that corresponding to the 2nd security level;
a fee corresponding to the 2nd security level is lower than that corresponding to the 3rd security level; and
a fee corresponding to the 3rd security level is lower than that corresponding to the 4th security level.

9. The communication network according to claim 7 or 8,
wherein the 4th security level is set as a default.
